# EUROPÄISCHE PATENTSCHRIFT

(11) **EP 0 655 561 B1**
(45) Veröffentlichungstag und Bekanntmachung des Hinweises auf die Patenterteilung: **25.03.1998**
(21) Anmeldenummer: 94116118.4
(22) Anmeldetag: 13.10.1994
(51) Int. Cl.: F16C 13/00, D21F 3/08, B24B 19/02

(54) **Mit Fasern verstärkte Kunststoffwalze mit Rautierung**
Fiber reinforced plastic roll with rhombic-shaped grooved surface
Rouleau en matière plastique renforcée de fibres à surface rainurée en losanges

(30) Priorität: 30.11.1993 DE 4340724
(43) Veröffentlichungstag der Anmeldung: 31.05.1995
(73) Patentinhaber: SGL TECHNIK GMBH, 86405 Meitingen (DE)
(72) Erfinder: Appels, Dipl. Ing. Thomas, D-86707 Kühlenthal (DE)

(56) Entgegenhaltungen:
- DE-A- 3 829 648
- DE-A- 4 116 641
- DE-A- 4 226 789
- FR-A- 2 550 174
- FR-A- 2 621 618
- US-A- 3 599 306

## Beschreibung

Die Erfindung betrifft Walzen oder Rollen mit einem Basiskörper aus faserverstärktem Kunstharz und einer mantelförmigen äußeren Oberfläche, die eine aus sich kreuzenden Kanälen bestehende Rautierung hat.

Bei der Herstellung und/oder Verarbeitung von Papier, von Kunststoffen oder sonstigen Stoffen, die in Form von Bahnen vorliegen, werden für den Transport, die Führung, das Umlenken, das Auf- und Abwickeln, das Auftragen von Substanzen etc. Walzen verwendet. Vor dem Beginn der Einführung von Walzen mit einem Kern aus mit Fasern verstärktem Kunststoff waren hierfür überwiegend metallische Walzen in Gebrauch, die häufig mit einem Oberflächenbelag aus Gummi oder Kunststoff ausgerüstet waren. Derartige Walzen oder Rollen waren oder sind für bestimmte Zwecke, z.B. um das Entstehen von Luftpolstern zwischen schnell in Längsrichtung bewegten Bahnen und den sie berührenden Walzen zu verhindern, an ihrer Manteloberfläche mit einer bestimmten Struktur in Form einer Rauhigkeit, Porosität oder von in sie eingebrachten Kanälen oder Vertiefungen ausgerüstet. Bei vielen dieser Ausführungsformen kreuzen sich diese Kanäle oder langgestreckten Vertiefungen unter im Prinzip beliebigen Winkeln, so daß an den Kreuzungsbereichen spitz-, stumpf- oder rechtwinkelige Flächenprofile entstehen. Die Gesamtheit der Kanäle und Vertiefungen ergibt zusammen mit diesen Oberflächenprofilen ein die Manteloberfläche der Walze oder Rolle bedecken- des Muster, das bei nicht rechtwinkeligen Kreuzungen als Rautenmuster oder Rautierung in Erscheinung tritt. Im Rahmen dieser Patentanmeldung soll der Begriff Rautenmuster oder Rautierung auch Muster mit sich in rechten Winkeln kreuzenden Kanälen oder Rillen einschließen. Die kritischen Stellen bei der Einbringung derartiger Rautierungen und bei der späteren Verwendung sind die an den Kreuzungsbereichen entstehenden erhabenen Winkelflächen. Bei den Walzenoberflächen aus Metall, Elasten, Hartgummi oder Kunststoff stellt das Herstellen einer fehlerfreien Rautierung kein größeres Problem dar. Bei Walzen oder Rollen aus faserverstärkten Kunststoffen ist die Situation ganz anders: Beim Einbringen der Rautierung in die Oberflächen von 1. mit Fasern aus Glas, Metall, Keramik, Mineralstoffen oder Kohlenstoff verstärkten Walzen oder Rollen, die eine Kunstharzmatrix haben oder 2. beim Einbringen einer Rautierung in die Oberfläche von mit Fasern verstärkten Kunstharzwalzen oder -Rollen, die aus Gründen des Verschleißschutzes oder zur Erzielung bestimmter Oberflächeneigenschaften mit einer vorzugsweise keramischen oder metallischen äußeren thermisch aufgespritzten Schicht versehen worden sind, das in den meisten Fällen durch Gravieren oder Schleifen geschieht, treten in untragbar großem Umfang Ausbrechungen und Abplatzungen auf. Für solche Schäden besonders anfällig sind die von zwei Kanalschenkeln einer Rautierung eingeschlossenen Winkelbereiche der Walzenoberfläche. Derartige Defekte und Schäden sind nicht reparierbar. So geschädigte Walzenoberflächen führen deshalb zur Unbrauchbarkeit der gesamten Walze. Es ist leicht einzusehen, daß bei der Vielzahl derartiger Winkelzonen in einer Rautierung praktisch immer einige davon beschädigt sind. Die Folge davon ist, daß es bis jetzt praktisch keine Walzen oder Rollen aus mit Fasern verstärktem Kunstharz mit einer äußeren verschleißresistenten Beschichtung gibt, die eine Rautierung aufweisen. Dieser Umstand, der die Verwendungsmöglichkeiten der wegen ihrer geringen stückbezogenen Masse, ihrer mechanischen Festigkeit, insbesondere Formhaltigkeit und Steifigkeit, speziell unter dynamischen Arbeitsbedingungen im Vergleich zu metallischen Walzen sehr vorteilhaften, mit Fasern verstärkten Kunststoffwalzen oder -Rollen stark begrenzt, ist das Problem, das der Erfindung zugrundeliegt. Die Aufgabe der Erfindung bestand in der Schaffung einer im wesentlichen aus einer Kunstharzmatrix und diese verstärkenden Fasern bestehenden Walze, die auf ihrer äußeren Arbeitsfläche eine Rautierung mit ausreichendem Tiefenprofil aufweist, die frei von Ausbrechungen und/oder Abplatzungen und/oder Ablösungen ist.

Walzen nach dem Oberbegriff des Anspruchs 1 bzw. 4, die zur Einbringung fehlerfreier Rautierungen geeignet sind, sind in der DE 41 16 641 Al und in der unveröffentlichten deutschen Patentanmeldung P 42 26 789.7 beschrieben. Gemeinsames Merkmal dieser Walzen oder Rollen ist ein Basiskörper aus faser-, bevorzugt kohlenstoffaserverstärktem Kunstharz mit einer mindestens einen Teil der äußeren Mantelfläche bedeckenden und mit dieser fest verbundenen metallische, keramische oder mineralische partikelförmige, gegebenenfalls verschleißfeste Füller enthaltenden Kunstharzschicht. Nach einer weiteren Ausführungsform ist die äußere, füllerhaltige Oberflächenschicht durch einen Bearbeitungsschritt soweit und in einer Weise abgetragen, daß eine Vielzahl nach außen weisender neu geschaffener, blanker Oberflächen der im übrigen fest in die Kunstharzmatrix der Beschichtung eingebundenen Partikel freiliegen und auf diese Weise haftvermittelnd für eine auf die so vorbehandelte Oberfläche nach einem thermischen Spritzverfahren aufgebrachte äußere Oberflächenschicht wirken. So aufgebrachte Oberflächenbeschichtungen haften ausgezeichnet auf den Basiswalzen und neigen bei bestimmungsgemäßen Beanspruchungen nicht zu Abplatzungen.

Nach den negativen Erfahrungen, die bei Versuchen zum Einbringen von Rautierungen in die Oberflächen von faserverstärkten Basiswalzen und auch in die Oberflächen von mit thermisch aufgespritzten Schichten versehenen Basiswalzen bisher üblicher Herstellungsweise gemacht worden waren, war die Feststellung, daß in die vorstehend beschriebenen, gemäß DE 41 16 641 A1 und der deutschen Patentanmeldung P 42 26 789.7 vorbehandelten faserverstärkten Walzen von Abplatzungen, Ausbrüchen und Ablösungen freie Rautierungen eingebracht werden können, eine nicht vorhersehbare Erkenntnis, die den technischen Verwendungsbereich von mit Fasern verstärkten Kunstharzwalzen stark erweiterte.

Die vorstehende Aufgabe wird durch die Walze oder Rolle gemäß Anspruch 1 bzw. 4 gelöst.

Die die Rautierung bildenden Kanäle durchdringen alle die Basiswalze bedeckenden Schichten und enden in der faserverstärkten Basiswalze. Das Eingreifen der Kanäle der Rautierung in die Basiswalze ist erforderlich, um die erforderliche Tiefe der Kanäle herzustellen. Die Kanäle sollten nach einer bevorzugten Ausführungsform jedoch nicht tiefer als 300 µm in die Basiswalze eindringen, um die Verstärkungswirkung der in Oberflächennähe angeordneten Fasern, die beim Einbringen der Kanäle in die Basiswalze zertrennt werden, nicht stärker als unbedingt notwendig zu schwächen. Erforderlichenfalls muß zur Kompensation einer solchen Schwächung die die verstärkenden Fasern enthaltende Zone in größerer Dicke ausgeführt werden. Natürlich kann auch die die Basiswalze bedeckende, von Verstärkungsfasern freie, füllerhaltige Schicht oder die gesamte Schichtenfolge dicker gestaltet werden. Dies wird jedoch häufig aus Gewichtsgründen und wegen der Schwierigkeiten so dicke und dabei homogene Schichten aufzubringen, vermieden. Die Gesamttiefe der die Rautierung bildenden Kanäle übersteigt im allgemeinen nicht 2000 µm, ist jedoch nicht darauf beschränkt.

Die Querschnittsform der die Rautierung bildenden Kanäle wird durch die geforderte Funktion und durch die technischen Möglichkeiten zu ihrer Herstellung bestimmt. Bevorzugt sind sie trog-, halboval- oder halbkreisförmig mit leicht abgerundeten oder gebrochenen Kanten am Übergang des Kanals in die Manteloberfläche der Walze oder Rolle. Es können jedoch auch andere Querschnittsformen wie z.B. rechteckige, quadratische, V-förmige mit abgerundeten oder scharfen Ecken eingebracht werden. Allerdings werden Kanäle mit scharfen Ecken oder Kanten nach Möglichkeit vermieden, um von letzteren ausgehende unerwünschte Spannungszustände zu vermeiden.

Die erfindungsgemäße Walze oder Rolle hat einen Basiskörper aus einer Kunstharzmatrix, die mit Glas-, Mineral-, Aramid- oder Kohlenstoffasern verstärkt ist, wobei Kohlenstoffasern bevorzugtes Verstärkungsmittel sind. Die Kohlenstoffasern können in Anpassung an den jeweiligen Verwendungszweck in jeder geeigneten Filament-, Kabel-, Faser- oder Fadenform und in graphitiertem oder nicht graphitiertem, jedoch carbonisiertem Zustand verwendet werden.

Im vorstehenden beschriebene Walzen werden hergestellt, indem in einem ersten Schritt der äußere Zylindermantel der faserverstärkten Basiswalze zunächst mit einer festhaftenden füllerhaltigen Schicht aus einem duroplastischem Kunstharz versehen und diese Schicht ausgehärtet wird. Dieses Verfahren ist im Prinzip in der unveröffentlichten deutschen Patentanmeldung Nr. P 42 26 789.7 beschrieben. Das für die Erzeugung dieser Schicht ausgewählte Kunstharz muß einerseits eine gute Haftfestigkeit auf der Kunstharzmatrix der Basiswalze und andererseits ein gutes Einbindungsvermögen für den partikelförmigen Füller haben. Die Wahl der geeigneten Stoff- und Materialpaarungen nimmt der Fachmann aufgrund seiner Kenntnisse, gegebenenfalls in Verbindung mit Vorversuchen vor. Der Füller kann einerseits aus allen Stoffen bestehen, die abrasionsfest sind. Hierzu zählen z.B. keramische Stoffe aus der Gruppe der Carbide, Oxide, Nitride oder Boride wie z.B. Siliciumcarbid, Borcarbid, Wolframcarbid, Aluminiumoxid, Chrom III-oxid, Carbobornitrid, Aluminiumborid, kubisches Bornitrid, Spinelle oder Stoffe aus der Gruppe der Hartmetalle wie z.B. Legierungen der Elemente Nickel, Cobalt, Molybdän, Silicium, Eisen, Aluminium, Bor. Für eine zweite Verfahrensvariante kann er andererseits aus Substanzen bestehen, die als auf chemischen Bindungen basierender Haftgrund für eine später durch ein thermisches Spritzverfahren aufzubringende abrasionsfeste Schicht dienen können. Damit die Füllerteilchen ihre Wirkung als Haftgrund entfalten können, wird wie im folgenden im Zusammenhang mit einer weiteren Verfahrensvariante noch ausgeführt werden wird, die füllerhaltige Kunstharzschicht nach dem Aushärten soweit und in einer Weise abgetragen, daß nach außen weisende, saubere, kunstharzfreie Oberflächen von weiterhin fest in die Kunstharzmatrix eingebetteten Füllerkörnchen entstehen. Die für die Herstellung der kunstharzhaltigen Zwischenschichten verwendeten Füllerpartikel haben eine Korngröße, die im Bereich von 5 bis 1000 µm liegt. Kleinere Körnungen werden bevorzugt eingesetzt, wenn nur eine abrasionsfeste äußere Kunstharzoberfläche geschaffen werden soll, größere werden vorzugsweise eingesetzt, wenn ein Haftgrund für eine thermisch aufgespritzte Schicht herzustellen ist.

In die äußere zylindermantelförmige Oberfläche der Walzen, die nach einem der zwei beschriebenen Verfahren vorbereitet worden sind, werden sodann in einem zweiten Schritt mittels mit materialabtragenden Werkzeugen ausgestatteter Maschinen, die die Rautierung bildenden und die Kunstharzschicht durch dringenden Kanäle oder Rillen eingearbeitet. Bevorzugt werden dafür Schleifwerkzeuge, bzw. programmgesteuerte Schleifmaschinen verwendet. Die eingesetzten Werkzeuge sind bezüglich ihrer Abrasionsfestigkeit den in der Kunstharzschicht befindlichen Füllern und der Form der zu erzeugenden Kanäle oder Rillen angepaßt. Das Einarbeiten von Kanälen und Rillungen im allgemeinen ist dem Fachmann bekannt, so daß hier nicht genauer darauf eingegangen wird.

Nach einer anderen Verfahrensvariante wird die faserverstärkte Kunstharzwalze, die eine füllerhaltige Kunstharzschicht aufweist, zunächst materialabtragend, z.B. durch Schleifen in einer solchen Weise behandelt, daß die Füllerteilchen saubere, kunstharzfreie Oberflächenanteile aufweisen. Danach wird mittels eines thermischen Spritzverfahrens eine festhaftende, abrasionsfeste, keramische oder metallische Außenschicht aufgetragen. Die im Hinblick auf die chemischen und thermischen Eigenschaften des Materials der Außenschicht ausgewählten Füllerteilchen dienen hier als sehr wirksame Haftungsvermittler für die Schichten. Genauere Informationen zu diesem Verfahren sind in der deutschen Offenlegungsschrift Nr.41 16 641 Al beschrieben und daraus entnehmbar. Die stoffliche Zusammensetzung dieser Schicht ist so gewählt, daß sie bezüglich ihrer Eigenschaften dem Verwendungszweck der Walze entspricht. In eine Walze mit einer so aufgebrachten, in den meisten Anwendungsfällen abrasionsfesten Außenschicht können dann wie bereits beschrieben worden ist, ohne das Entstehen von Ausbrüchen und Abplatzungen, Rillen oder Kanäle, die bis in die Oberflächenzone des faserverstärkten Teils des Basiskörpers hineinreichen, eingearbeitet werden. Nach einer weiteren Verfahrensvariante kann auch auf eine Walze, in die nach einem der im vorstehenden Verfahren eine Rillung oder Rautierung eingebracht worden ist, durch ein thermisches Spritzverfahren nach dem Stand der Technik eine weitere Oberflächenschicht aufgetragen werden, die weiteren nachfolgenden Verarbeitungsschritten oder dem technischen Verwendungszweck der Walze oder Rolle angepaßt ist. Diese Schicht kann beispielsweise abrasionsfest sein und aus einem keramischen Werkstoff oder aus Hartmetall bestehen oder sie kann z.B. metallisch sein und als Grundlage für die stromlose oder elektrolytische Abscheidung eines Metallfinish dienen.

Der Wert der beschriebenen Verfahren liegt in der Kombination eines ersten Verfahrensschrittes, nämlich der Herstellung von festhaftenden füllerhaltigen Kunstharzbelägen oder der Herstellung von festhaftenden füllerhaltigen Kunstharzbelägen, die fest mit einer thermisch aufgespritzten äußeren Schicht verbunden sind und eines zweiten Verfahrensschrittes, nämlich der Einbringung von sich kreuzenden Kanälen oder Rillen, die diese Schichten durch dringen. Durch diese Kombination zweier Verfahrensschritte wurde es erst möglich, praktisch fehlerfreie Kanäle, Rillungen und Rautierungen in Walzen aus faserverstärkten Kunstharzen einzubringen.

Die Erfindung wird im folgenden beispielhaft anhand von Figuren erläutert.

Es zeigen in schematischer, nicht maßstabgetreuer Wiedergabe:
- Fig. 1,: die Außenansicht eines Abschnitts einer mit einer Rautierung versehenen Mantelfläche einer Walze,
a) im rechten Teil in einer nicht schadhaften Ausführung
b) im linken Teil in einer Ausführung ohne die anmeldungsgemäße Lösung mit schadhafter Rautierung.
- Fig. 2 bis 5,: Ausschnitte von Querschnitten von Mantelflächen mit verschiedenen Varianten der Rillungen und Rautierungen.

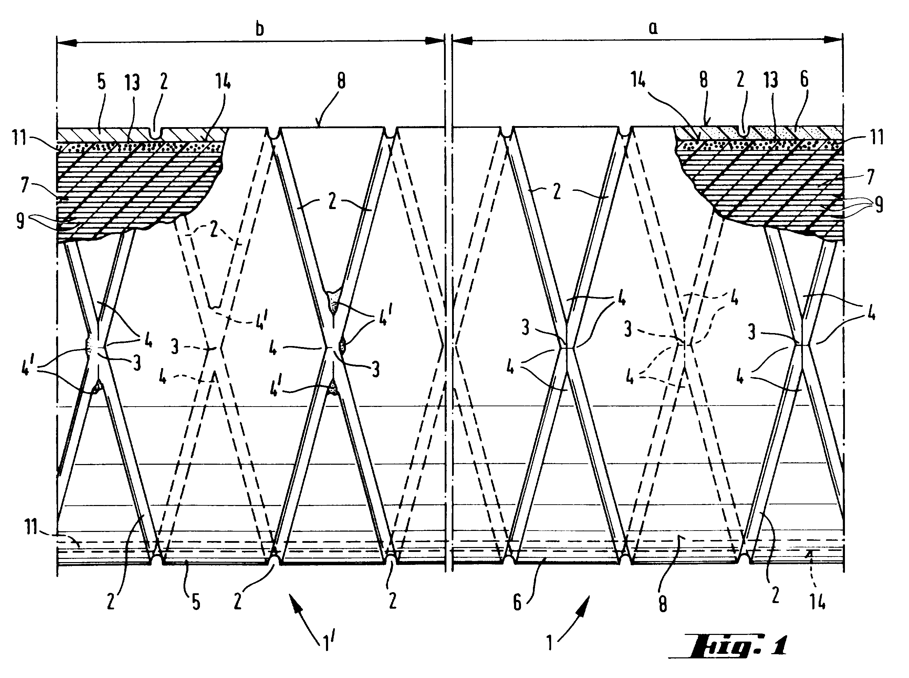

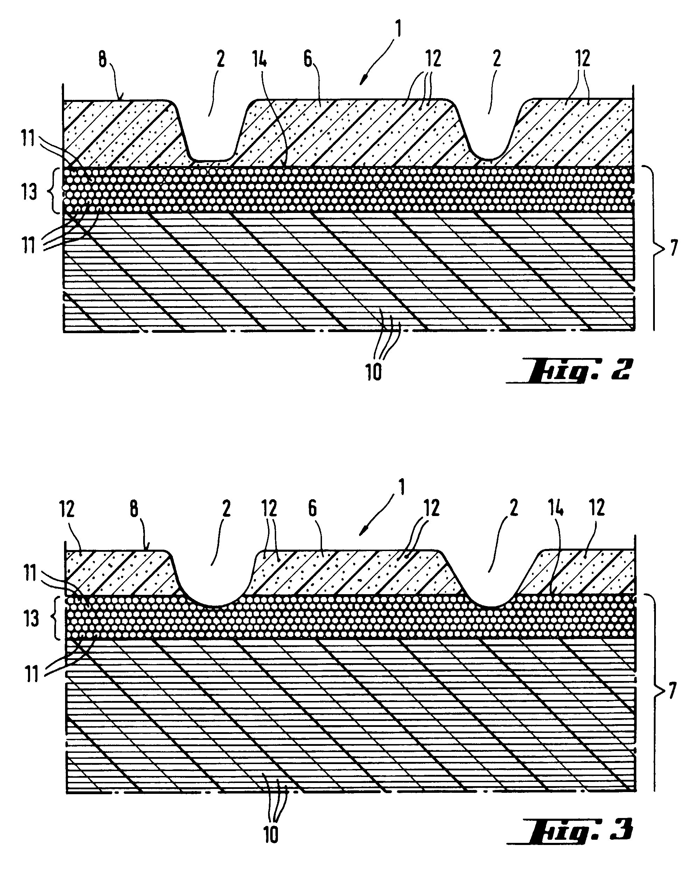

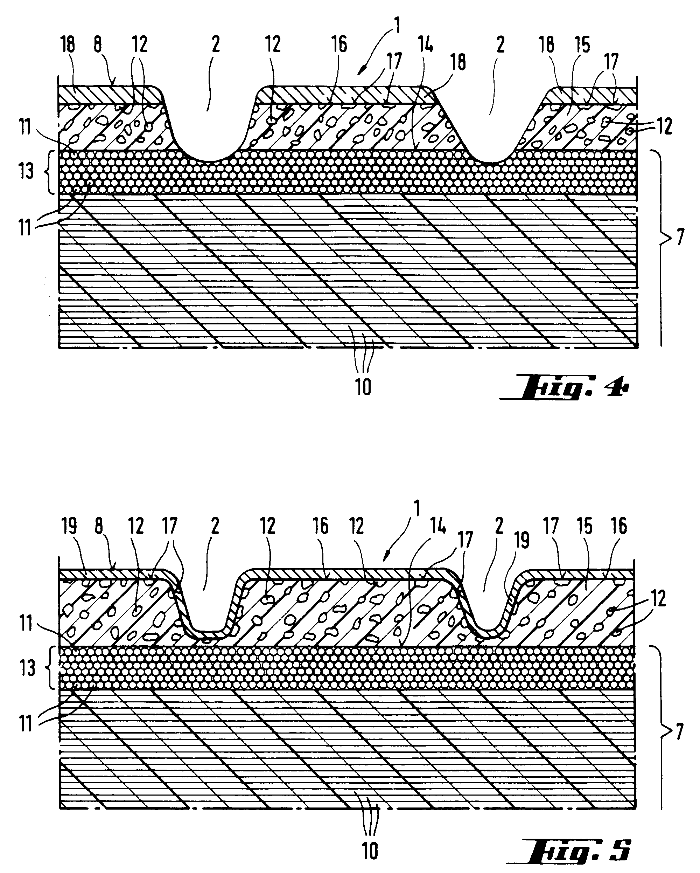

Die Figuren 1, 2 und 5 dienen zur Illustration und zeigen Einzelheiten, die auf die erfindungsgemäßen Ausführungsformen der Figuren 3 und 4 übertragbar sind.

Fig. 1 zeigt einen in die Teile a und b unterteilten Abschnitt einer Kunstharzwalze 1, 1' mit einer nur symbolisch wiedergegebenen Verstärkung 9 aus Kohlenstoffasern, in deren Oberfläche eine Rautierung bildende Kanäle oder Rillen 2 eingearbeitet worden sind. An den Kreuzungsbereichen 3 der Kanäle 2 sind durch die Kanäle 2 begrenzte, winkelförmige Flächensegmente 4, 4' vorhanden. In Teil b von Fig. 1, der einen nicht anmeldungsgemäßen Zustand einer Rillung/Rautierung in einer Walze 1' wiedergibt, sind diese winkelförmigen Flächensegmente 4 mindestens zum Teil beim Einbringen der Kanäle 2 oder bei späterer mechanischer Belastung ausgebrochen, 4'. Dadurch wurde die Walze unbrauchbar. Bei dieser Walze 1' war die Verschleißschutzschicht 5 ohne Zwischenschaltung einer die Haftung vermittelnden Zwischenschicht direkt auf den faserverstärkten Basiskörper 7 der Walze 1' mittels eines thermischen Spritzverfahrens aufgebracht worden. Völlig anders ist die Situation im Teil a der Walze: Die Verschleißschutzschicht 6 besteht aus einer fest auf dem Basiskörper 7 der Walze 1 haftenden Kunstharzmatrix, z.B. einem Expoxidharz, mit einem verschleißfesten Füller, z.B. Aluminiumoxid. Die eingeschliffenen Rillen 2 grenzen in allen Bereichen, auch an den Kreuzungsbereichen 3 ohne Abplatzungen 4' und Ausbrüche 4' an die äußere Oberfläche 8 der Walze 1 an.

In Fig. 2 sind die verstärkenden Fasern in unterschiedlicher Anordnung schematisch wiedergegeben. Die innen liegenden Fasern 10 sind in Form von Wickellagen von Großkabeln aus Kohlenstoffilamenten im wesentlichen walzenlängsachsenparallel angeordnet, während die radial außen liegenden Fasern 11 ebenfalls in Form von Wickellagen, jedoch im wesentlichen in Umfangsrichtung in den Basiskörper 7 eingebunden sind. Die in den Fig. 3, 4 und 5 dargestellten faserverstärkten Basiskörper 7 haben einen entsprechenden Aufbau. In Fig. 2 ist der Basiskörper 7 mit einer gegen abrasive Beanspruchung beständigen, einen abrasionsfesten Füller 12 enthaltenden Kunstharzschicht 6 fest verbunden. Die beim Kreuzen die Rautierung bildenden Kanäle 2 durchdringen die verschleißresistente Kunstharzschicht 6 nicht. Sie haben als Beispiele einmal einen trogförmigen und zum anderen einen eher V-förmigen Querschnitt. Ecken und Kanten sind abgerundet.

Fig. 3 zeigt eine Fig. 2 bezüglich des Aufbaus des Basiskörpers 7 und der abrasionsresistenten Beschichtung 6 entsprechende Anordnung. Im Unterschied zu Fig. 2 durchdringen die Kanäle 2 hier die äußere, füllerhaltige Kunstharzschicht 6 und greifen in die äußerste, Verstärkungsfasern 11 enthaltende Zone 13 der Basiswalze 7 ein. Die Kanäle oder Rillen 2 haben hier einen halbkreisförmigen bis ovalen Querschnitt. Ausbrüche oder Abplatzungen an den Kanten oder Kreuzungsbereichen treten nicht auf.

Fig. 4 stellt die faserverstärkte Basiswalze 7 mit einer auf ihrer äußeren Oberfläche 14 festhaftenden, einen keramischen oder metallischen partikelförmigen Füller 12 enthaltenden Kunstharzschicht 15 dar. Diese Kunstharzschicht ist an ihrer äußeren Oberfläche 16 in einer solchen Weise abgetragen, daß nach außen zeigende, blanke Oberflächen 17 von Füllerteilchen 12 vorliegen, die als Haftungsvermittler für die äußerste, mittels eines thermischen Spritzverfahrens aufgebrachte verschleißfeste Schutzschicht 18 dient. Die Kanäle 2 durchdringen sowohl die äußere, thermisch aufgespritzte Schicht 18 als auch die füllerhaltige Kunstharzschicht 15 und greifen etwas in die äußere faserverstärkte Oberflächenschicht 13 der Basiswalze 7 ein. An keiner dieser Schichten 18, 15, 13 treten Ausbrüche, Abplatzungen oder Ablösungen auf.

Die in Fig. 5 wiedergegebene Walze hat wie die in Fig. 4 dargestellte eine füllerhaltige Haftschicht 15 mit nach außen weisenden, blanken Oberflächen 17 von Füllerpartikeln 12. Im Unterschied zur Variante nach Fig. 4 wurden hier die Kanäle 2 nach der Endbearbeitung der Oberfläche 16, die später die Haftung zur thermisch aufgespritzten Schicht 19 vermittelt, in die Schicht 15 eingearbeitet. Dabei wurden auch an den Kanalwänden saubere Oberflächenanteile 17 der Füller 12 geschaffen. Auf die so vorbereitete Walze wurde sodann mittels eines thermischen Spritzverfahrens eine Metallschicht 19 z.B. aus Chrom oder Nickel aufgetragen, die entweder als äußerste Gebrauchsschicht der Walze 1 oder als Zwischenschicht für die Anbringung weiterer, nicht dargestellter Schichten, z.B. durch elektrolytischen Auftrag, verwendet werden kann. Auch bei dieser Walze haften die Schichten unlösbar aneinander. Abplatzungen, Ausbrüche oder Ablösungen an den Kanälen oder den Kreuzungsbereichen der Rautierung treten nicht auf.

### Bezugszeichenliste

- 1: Walze oder Rolle
- 1': Walze oder Rolle
- 2: Kanäle oder Rillen
- 3: Kreuzungsbereiche der Kanäle 2
- 4: winkelförmige Flächensegmente, durch Kanäle 2 begrenzt, nicht abgeplatzt
- 4': wie 4 aber abgeplatzt
- 5: Verschleißschutzschicht auf Walze 1', direkt mittels thermischen Spritzverfahrens auf faserverstärkte Walze 7 aufgebracht.
- 6: Verschleißschutzschicht aus Kunstharz/Füllersystem direkt auf faserverstärkte Walze (7) aufgebracht.
- 7: Faserverstärkter Basiskörper der Walze (1, 1')
- 8: äußere Oberfläche der Walze oder Rolle 1
- 9: Symbol für Faserverstärkung des Basiskörpers der Walze.
- 10: innenliegende Verstärkungsfasern (im wesentlichen walzenlängsachsenorientiert)
- 11: radial außen liegende Verstärkungsfasern (in Umfangsrichtung gewickelt)
- 12: (verschleißfester) Füller (in (6,15))
- 13: äußere Zone des Basiskörpers (7) der Walze (1, 1'), in Umfangsrichtung gewickelte Fasern (11) enthaltend
- 14: äußere Oberfläche der Basiswalze (7)
- 15: auf Basiswalze (7) festhaftende als Haftvermittler dienende füllerhaltige Kunstharzschicht.
- 16: äußere Oberfläche von (15)
- 17: blanke, haftungsvermittelnde Oberflächen von Füllerteilchen
- 18: äußere auf Haftgrund thermisch aufgespritzte Verschleißschutzschicht
- 19: äußere, auf Haftgrund thermisch aufgespritzte metallische Schicht

## Patentansprüche

1. Einen Basiskörper (7) aus faserverstärktem Kunstharz aufweisende Walze (1) oder Rolle (1), bei der die äußere zylindermantelförmige Oberfläche (14) des Basiskörpers (7) mindestens zum Teil mit einer festhaftenden Schicht (6) aus einem mindestens einen partikelförmigen, verschleißfesten Füller (12) enthaltenden duroplastischen Kunstharz bedeckt ist,
dadurch gekennzeichnet, daß
die Walze (1) oder Rolle (1) in ihrer nach außen weisenden, zylindermantelförmigen Oberfläche (8) eine aus sich kreuzenden Kanälen (2) bestehende Rautierung, die frei von Ausbrüchen oder/und Abplatzungen ist, aufweist, wobei die die Rautierung bildenden Kanäle (2) so tief sind, daß sie die äußere, aus verschleißfestem Füller (12) und der duroplastischen Kunstharzmatrix bestehende Schicht (6) durchdringen und in die Oberflächenzone des faserverstärkten Teils des Basiskörpers (7) hineinreichen.

2. Walze (1) oder Rolle (1) nach Patentanspruch 1,
dadurch gekennzeichnet, daß
die die Rautierung bildenden Kanäle (2) bis zu einer Tiefe von höchstens 300 µm in die faserverstärkte Oberflächenzone (13) des Basiskörpers (7) der Walze (1) oder Rolle (1) hineinreichen.

3. Walze (1) oder Rolle (1) nach Patentanspruch 1 oder 2
dadurch gekennzeichnet, daß
die die Rautierung bildenden Kanäle (2) eine Tiefe von höchstens 2000 µm haben.

4. Einen Basiskörper (7) aus faserverstärktem Kunstharz aufweisende Walze (1) oder Rolle (1), bei der die äußere zylindermantelförmige Oberfläche (14) des Basiskörpers (7) die im folgenden beschriebenen zwei aufeinanderfolgenden Schichten (15), (18) trägt und mindestens zum Teil mit ihnen bedeckt ist:
1. eine auf der zylindermantelförmigen Oberfläche (14) des Basiskörpers (7) festhaftende Schicht (15) aus einem, einen metallischen, keramischen oder mineralischen Füller (12) enthaltenden duroplastischen Kunstharz, deren (15) äußere Oberfläche (16) materialabtragend in einer solchen Weise bearbeitet worden ist, daß sie von Kunstharz freie, saubere, nach außen weisende und als Haftvermittler wirkende Oberflächen (17) von Füllerpartikeln (12) aufweist und
2. eine verschleißfeste Schicht (18), die auf der durch die Bearbeitung der Oberfläche der füllstoffhaltigen Schicht (15) geschaffenen Oberfläche (16) fest haftet und die mittels eines thermischen Spritzverfahrens aufgebracht worden ist,
dadurch gekennzeichnet, daß
die Walze (1) oder Rolle (1) in ihrer nach außen weisenden, zylinderförmigen Oberfläche (8) eine aus sich kreuzenden Kanälen (2) bestehende Rautierung, die frei von Ausbrüchen oder/und Abplatzungen ist, aufweist, wobei die die Rautierung bildenden Kanäle (2) so tief sind, daß sie die äußere, thermisch aufgespritzte Schicht (18) und die darunter befindliche, aus verschleißfestem Füller (12) und der duroplastischen Kunstharzmatrix bestehende Schicht (15) durchdringen und in die Oberflächenzone des faserverstärkten Teils des Basiskörpers (7) hineinreichen.

5. Walze (1) oder Rolle (1) nach Patentanspruch 4,
dadurch gekennzeichnet, daß
die die Rautierung bildenden Kanäle (2) bis zu einer Tiefe von höchstens 300 µm in die faserverstärkte Oberflächenzone (13) des Basiskörpers (7) der Walze (1) oder Rolle (1) hineinreichen.

6. Walze (1) oder Rolle (1) nach Patentanspruch 4 oder 5,
dadurch gekennzeichnet, daß
die die Rautierung bildenden Kanäle (2) eine Tiefe von höchstens 2000 µm haben.

7. Walze (1) oder Rolle(1) nach einem der Patentansprüche 1 bis 6,
dadurch gekennzeichnet, daß
die die Rautierung bildenden Kanäle (2) eine Querschnittsform haben, die mindestens unterhalb der Ebene der Walzenoberfläche (8) frei von Ecken und Kanten ist.

8. Walze (1) oder Rolle (1) nach einem der Patentansprüche 1 bis 7,
dadurch gekennzeichnet, daß
der Basiskörper (7) mit Fasern aus nicht graphitischem Kohlenstoff oder aus Graphit verstärkt ist.

9. Walze (1) oder Rolle (1) nach einem der Patentansprüche 1 bis 8,
dadurch gekennzeichnet, daß
die von der Rautierung nicht durchbrochenen Zonen der Oberfläche (8) der Walze (1) oder Rolle (1) und die Oberflächen der die Rautierung bildenden Kanäle von einer weiteren thermisch aufgespritzten Schicht bedeckt sind.

## Claims

1. Roller (1) or cylinder (1) having a base body (7) of fibre-reinforced synthetic resin, wherein the outer surface (14) of the base body (7), which surface (14) is in the form of a cylinder jacket, is covered at least in part by an adhering layer (6) of a thermosetting synthetic resin containing at least one particulate, wear-resistant filler (12), characterized in that the roller (1) or cylinder (1) has in its outwardly pointing surface (8), which is in the form of a cylinder jacket, a lozenging consisting of intersecting channels (2), which lozenging is free of broken-off bits and/or chipping, with the channels (2) which form the lozenging being so deep that they penetrate the outer layer (6), which consists of a wear-resistant filler (12) and the thermosetting synthetic resin matrix, and reach into the surface zone of the fibre-reinforced part of the base body (7).

2. Roller (1) or cylinder (1) according to claim 1, characterized in that the channels (2) forming the lozenging reach as far as a depth of at most 300 µm into the fibre-reinforced surface zone (13) of the base body (7) of the roller (1) or cylinder (1).

3. Roller (1) or cylinder (1) according to claim 1 or 2, characterized in that the channels (2) forming the lozenging have a depth of at most 2000 µm.

4. Roller (1) or cylinder (1) having a base body (7) of fibre-reinforced synthetic resin, wherein the outer surface (14) of the base body (7), which surface (14) is in the form of a cylinder jacket, supports the two successive layers (15), (18) described in the following and is covered by them at least in part:
1. one layer (15) adhering to the surface (14) of the base body (7), which surface (14) is in the form of a cylinder jacket and which layer (15) consists of a thermosetting synthetic resin containing a metallic, ceramic or mineral filler (12), the outer surface (16) of which layer (15) has been processed in a materialeroding manner in such a way that it has surfaces (17) of filler particles (12) which are free of synthetic resin, are clean, point to the outside and act as bonding agents and
2. one wear-resistant layer (18) which adheres firmly to the surface (16) created by the processing of the surface of the filler-containing layer (15) and which has been applied by means of a thermal spraying method, characterized in that the roller (1) or cylinder (1) in its outwardly directed, cylindrical surface (8) has a lozenging which consists of intersecting channels (2) and which is free of broken-off bits and/or chipping, with the channels (2) which form the lozenging being so deep that they penetrate the outer layer (18) which is sprayed on thermally and the layer (15) located beneath it, which consists of a wear-resistant filler (12) and the thermosetting synthetic resin matrix, and reach into the surface zone of the fibre-reinforced part of the base body (7).

5. Roller (1) or cylinder (1) according to claim 4, characterized in that the channels (2) forming the lozenging reach as far as a depth of at most 300 µm into the fibre-reinforced surface zone (13) of the base body (7) of the roller (1) or cylinder (1).

6. Roller (1) or cylinder (1) according to claim 4 or 5, characterized in that the channels (2) forming the lozenging have a depth of at most 2000 µm.

7. Roller (1) or cylinder (1) according to one of claims 1 to 6, characterized in that the channels (2) forming the lozenging have a cross-sectional form which is free of corners and edges at least below the plane of the roller surface (8).

8. Roller (1) or cylinder (1) according to one of claims 1 to 7, characterized in that the base body (7) is reinforced with fibres of non-graphitic carbon or of graphite.

9. Roller (1) or cylinder (1) according to one of claims 1 to 8, characterized in that the zones of the surface (8) of the roller (1) or cylinder (1) not opened by the lozenging and the surfaces of the channels forming the lozenging are covered by another layer which is sprayed on thermally.

## Revendications

1. Cylindre (1) ou rouleau (1) présentant un corps de base (7) en résine synthétique, renforcée par des fibres, dans lequel la surface extérieure (14) du corps de base (7), en forme d'enveloppe cylindrique, est recouverte au moins en partie par une couche adhésive (6) en résine synthétique, thermodurcissable, contenant au moins une charge (12) résistant à l'usure, sous forme de particules,
caractérisé en ce que
le cylindre (1) ou le rouleau (1) présente sur sa surface (8) tournée vers l'extérieur et en forme d'enveloppe cylindrique, une structure losangée, consistant en des canaux (2), qui se croisent, structure qui est exempte d'ébréchures et/ou d'arrachements, les canaux (2) formant la structure losangée étant assez profonds pour passer à travers la couche extérieure (6), se composant de la charge (12) résistant à l'usure et de la matrice en résine synthétique thermodurcissable, et pénétrant dans la zone superficielle de la partie du corps de base (7), qui est renforcée par des fibres.

2. Cylindre (1) ou rouleau (1) selon la revendication 1,
caractérisé en ce que
le canaux (2), qui forment la structure losangée, pénètrent jusqu'à une profondeur d'au maximum 300 µm dans la zone superficielle (13), qui est renforcée par des fibres, du corps de base (7) du cylindre (1) ou du rouleau (1).

3. Cylindre (1) ou rouleau (1) selon la revendication 1 ou la revendication 2,
caractérisé en ce que
les canaux (2), qui forment la structure losangée, ont une profondeur d'au maximum 2000 µm.

4. Cylindre (1) ou rouleau (1) présentant un corps de base (7) en résine synthétique, renforcée par des fibres, dans lequel la surface extérieure (14) du corps de base (7), en forme d'enveloppe cylindrique, porte deux couches (15, 18) consécutives, décrites dans la suite, et est recouverte au moins en partie par elles :
1. une couche (15) adhérant à la surface (14) en forme d'enveloppe cylindrique du corps de base (7) en une résine synthétique thermodurcissable, contenant une charge (12) métallique, céramique ou minérale, la surface extérieure (16) de cette couche (15) étant traitée, par enlèvement de matière d'une manière telle qu'elle présente des surfaces (17) de particules de charge (12), exemptes de résine, propres, tournées vers l'extérieur et opérant comme agent adhésif et
2. une couche (18), résistant à l'usure, qui adhère de façon solidaire à la surface (16) réalisée par le traitement de la surface de la couche (15), contenant la charge, et qui est appliquée thermiquement un moyen de pulvérisation au pistolet,
caractérisé en ce que
le cylindre (1) ou le rouleau (1), présente sur sa surface (8), en forme de cylindre, tournée vers l'extérieur, une structure losangée, consistant en des canaux (2), qui se croisent, structure qui est exempte d'ébréchures et/ou d'arrachements, les canaux (2), qui forment la structure losangée étant assez profonds pour pénétrer dans la couche extérieure (18) appliquée thermiquement au pistolet et dans la couche (15) se trouvant en dessous et consistant en une charge (12) résistant à l'usure, et la matrice thermodurcissable en résine synthétique et pour atteindre la zone superficielle de la partie du corps de base (7), qui est renforcée par des fibres.

5. Cylindre (1) ou rouleau (1) selon la revendication 4
caractérisé en ce que
les canaux (2), qui forment la structure losangée, pénètrent jusqu'à une profondeur d'au maximum 300 µm dans la zone superficielle (13) du corps de base (7) du cylindre (1) ou du rouleau (1), qui est renforcée par des fibres.

6. Cylindre (1) ou rouleau (1) selon la revendication 4 ou la revendication 5,
caractérisé en ce que
les canaux (2), qui forment la structure losangée, ont une profondeur d'au maximum 2000 µm.

7. Cylindre (1) ou rouleau (1) selon l'une des revendications 1 à 6,
caractérisé en ce que
les canaux (2), qui forment la structure losangée, ont une section transversale dont la forme est, au moins en dessous du plan de la surface du cylindre (8), exempte de coins et d'arêtes.

8. Cylindre (1) ou rouleau (1) selon l'une des revendications 1 à 7,
caractérisé en ce que
le corps de base (7) est renforcé par des fibres en carbone non graphité ou en graphite.

9. Cylindre (1) ou rouleau (1) selon l'une des revendications 1 à 8,
caractérisé en ce que les zones de la surface (8) du cylindre (1) ou du rouleau (1), qui ne sont pas interrompues par la structure losangée, et les surfaces des canaux, qui forment la structure losangée, sont recouvertes par une autre couche appliquée thermiquement au pistolet.
